# EUROPEAN PATENT APPLICATION

(11) **EP 4 653 244 A1**
(43) Date of publication of application: **26.11.2025**
(21) Application number: 24177908.1
(22) Date of filing: 24.05.2024
(51) Int. Cl.: B60L 50/64, B60L 50/60, H01M 50/204, H01M 50/249

(54) **A BATTERY PACK AND A VEHICLE**

(71) Applicant: Volvo Truck Corporation, 405 08 Göteborg (SE)
(72) Inventor: Rout, Dhirendra, 422 54 Göteborg (SE); Irannezhad, Mike, 413 30 Göteborg (SE); Jonsson, Kasper, 417 57 Göteborg (SE)
(74) Representative: Kransell & Wennborg KB

(57) **Abstract**

A battery pack (1) and a vehicle (100) are disclosed. The battery pack (1) comprises at least two battery module assemblies (2, 3, 4, 5), wherein each one of the at least two battery module assemblies (2, 3, 4, 5) comprises:
- a plurality of battery modules (BM1-BM4), each battery module comprising a plurality of electrochemical battery cells (EC) stacked next to each other,
wherein the plurality of battery modules (BM1-BM4) are stacked on top of each other in the height direction (H), and are formed such that a first battery module (BM1) provided below a second battery module (BM2) extends beyond the second battery module (BM2) in the width direction (W) to an outer end (21, 31) of the battery module assembly (2, 3), as seen in the width direction (W).

## Description

### TECHNICAL FIELD

The disclosure relates generally to energy storage systems. In particular aspects, the disclosure relates to a battery pack and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

An electrically powered vehicle may comprise an energy storage system for storing electrical energy. The energy storage system is typically in the form of one or more battery packs comprising a plurality of electrochemical cells. The electrochemical cells may be lithium-ion cells or any other type of cell for storing electrical energy.

There is a strive to improve packaging and configuration of battery packs for vehicles, such as providing a more cost-effective, reliable and/or robust packaging and/or configuration of the battery packs.

### SUMMARY

According to a first aspect of the disclosure, a battery pack comprising at least two battery module assemblies is provided. The battery pack has a longitudinal extension along a longitudinal direction, a width extension along a width direction and a height extension along a height direction. Each one of the at least two battery module assemblies comprises:
- a plurality of battery modules, each battery module comprising a plurality of electrochemical battery cells stacked next to each other,

wherein the plurality of battery modules are stacked on top of each other in the height direction, and are formed such that a first battery module provided below a second battery module extends beyond the second battery module in the width direction to an outer end of the battery module assembly, as seen in the width direction, and
wherein a first battery module assembly and a second battery module assembly of the at least two battery module assemblies are arranged next to each other such that the outer ends face each other in the width direction and such that a longitudinally extending space is formed above the respective first battery module of the first and second battery module assemblies, as seen in the height direction, and in-between the respective second battery module of the first and second battery module assemblies, as seen in the width direction. The first aspect of the disclosure may seek to provide an improved configuration of the battery pack which is compact, modular, easy to package and mount to a vehicle, cost-effective, reliable and/or robust. A technical benefit may include that the battery pack will comprise separate building blocks which together form a favorable battery pack topology which is suitable for a vehicle and/or easy to mount to the vehicle. Another technical benefit may include that each battery module assembly, i.e., each building block, may have separate connection interfaces to the vehicle, such as a separate coolant interface and/or a separate electrical connection interface. A yet further technical benefit may include that the battery pack configuration allows for more favorable locations of the separate connection interfaces.

Optionally in some examples, including in at least one preferred example, the first and second battery module assemblies are L-shaped, as seen in a sectional plane which is perpendicular to the longitudinal direction. A technical benefit may include improved integration of the battery pack to a vehicle, such as close to and at least partially below a vehicle frame of the vehicle.

Optionally in some examples, including in at least one preferred example, the first and second battery module assemblies together form a U-shaped structure, as seen in a sectional plane which is perpendicular to the longitudinal direction. A technical benefit may include improved integration of the battery pack to a vehicle, such as close to and at least partially below a vehicle frame of the vehicle.

Optionally in some examples, including in at least one preferred example, the first battery module assembly and the second battery module assembly are separate units such that the first and second battery module assemblies are allowed to be separated from each other. A technical benefit may include facilitated mounting to a vehicle and/or facilitated dismounting of the battery pack from the vehicle.

Optionally in some examples, including in at least one preferred example, the outer ends of the first and second battery module assemblies which face each other in the width direction are provided in a mid-section of the battery pack, wherein the mid-section has a center midway between a first battery pack outer end of the first battery module assembly and a second battery pack outer end of the second battery module assembly, as seen in the width direction, and an extension in the width direction which corresponds to 30 %, 20 %, 10 % or less of a maximum width of the battery pack between the first battery pack outer end and the second battery pack outer end. A technical benefit may include that a more favorable topology of the battery pack is provided which allows the first battery module of each one of the first and second battery module assemblies to be packaged close to each other, e.g., below a vehicle frame.

Optionally in some examples, including in at least one preferred example, the battery pack further comprises at least one elongated media arranged in the longitudinally extending space and connected to at least one of the at least two battery module assemblies. A technical benefit may include a favorable location of the elongated media, e.g., using an already available space in a vehicle which may not accommodate battery modules. The at least one elongated media may be any one or a combination of the following: a coolant conduit, such as a pipe or a hose, an electric cable, a data communication cable, etc.

Optionally in some examples, including in at least one preferred example, the at least one elongated media comprises a first elongated media which extends in the longitudinal direction in the longitudinally extending space and is connected to the at least one of the at least two battery module assemblies via a first connection interface which is provided on a battery pack outer end of the battery pack which faces away from the battery pack in a direction along the longitudinal direction. A technical benefit may include a favorable location of the first connection interface, facilitating routing of the first elongated media. For example, by this configuration, it may be easier for a user to access the first connection interface, such as for servicing purposes.

Optionally in some examples, including in at least one preferred example, the first elongated media is adapted to transport a coolant fluid.

Optionally in some examples, including in at least one preferred example, the at least one elongated media comprises a second elongated media which extends in the longitudinal direction in the longitudinally extending space and is connected to the at least one of the at least two battery module assemblies via a second connection interface which is provided on a side surface of the at least one of the at least two battery module assemblies which delimits the longitudinally extending space. A technical benefit may include a favorable location of the second connection interface, facilitating routing of the second elongated media.

Optionally in some examples, including in at least one preferred example, the second elongated media is an electric cable and/or a data communication cable.

Optionally in some examples, including in at least one preferred example, at least one of the at least two battery module assemblies comprises a vent opening configured to eject hot gas and/or particles from the electrochemical battery cells, wherein the vent opening is provided on a battery pack outer end or in-between two adjacent battery module assemblies of the at least two battery module assemblies. A technical benefit of having the vent opening on a battery pack outer end may include that space may be saved in-between two adjacent battery module assemblies of the at least two battery module assemblies. This may result in more compact packaging. A technical benefit of having the vent opening in-between two adj acent battery module assemblies may include that more space for elongated media connection interfaces at the battery pack outer ends is made available.

Optionally in some examples, including in at least one preferred example, a third battery module assembly and a fourth battery module assembly of the at least two battery module assemblies are arranged next to the first and second battery module assemblies and next to each other such that the outer ends face each other in the width direction and such that the longitudinally extending space is further formed above the respective first battery module of the third and fourth battery module assemblies, as seen in the height direction, and in-between the respective second battery module of the third and fourth battery module assemblies, as seen in the width direction. A technical benefit may include that further improved packaging of battery modules in the longitudinal direction is achieved.

Optionally in some examples, including in at least one preferred example, the third and fourth battery module assemblies are L-shaped, as seen in a sectional plane which is perpendicular to the longitudinal direction, and/or the third and fourth battery module assemblies together form a U-shaped structure, as seen in a sectional plane which is perpendicular to the longitudinal direction. A technical benefit may include improved integration of the battery pack to a vehicle, such as close to and at least partially below a vehicle frame of the vehicle.

Optionally in some examples, including in at least one preferred example, the first, second, third and fourth battery module assemblies are separate units such that the first, second, third and fourth battery module assemblies are allowed to be separated from each other. A technical benefit may include facilitated mounting to a vehicle and/or facilitated dismounting of the battery pack from the vehicle.

Optionally in some examples, including in at least one preferred example, at least one battery module assembly of the at least two battery module assemblies comprises a cooling plate member which is provided in-between two adj acent battery modules which are stacked on top of each other in the height direction. A technical benefit may include improved cooling, e.g., the cooling plate member is arranged to cool each one of the two adjacent battery modules which are stacked on top of each other.

Optionally in some examples, including in at least one preferred example, at least one battery module assembly of the at least two battery module assemblies comprises an auxiliary module which comprises auxiliary electronic devices, such as one or more contactors, one or more fuses, one or more busbars, and/or one or more electronic control units. A technical benefit may include that the at least one battery module assembly, such as each one of the at least two battery module assemblies, has its own separate auxiliary module, e.g., resulting in a modular battery pack configuration which can be easily scaled up or down in size.

Optionally in some examples, including in at least one preferred example, the auxiliary module is provided on a first level in the height direction of the battery module assembly, wherein the battery module assembly further comprises a third battery module provided on the first level adjacent to the auxiliary module. A technical benefit may include that a compact packaging of the battery module assembly is achieved.

Optionally in some examples, including in at least one preferred example, the first level is a top level of the battery module assembly, as seen in the height direction. A technical benefit may include that the auxiliary module is more easily accessible for a user, such as for servicing.

Optionally in some examples, including in at least one preferred example, the battery pack comprises a cooling plate member as disclosed herein, and the cooling plate member is provided directly below the auxiliary module and the third battery module and configured to cool the auxiliary module and the third battery module. A technical benefit may include that one cooling plate member is used for cooling the auxiliary module and the third battery module. This may result in a more cost-effective configuration of the battery module assembly, e.g., fewer separate parts may be required.

According to a second aspect of the disclosure, a vehicle comprising a battery pack according to any one of the examples of the first aspect of the disclosure is provided. Advantages and technical benefits of the second aspect of the disclosure are analogous to the advantages and technical benefits of the first aspect of the disclosure.

Optionally in some examples, including in at least one preferred example, the vehicle comprises a vehicle frame which extends along a longitudinal direction of the vehicle, corresponding to the longitudinal direction of the battery pack, wherein the vehicle frame comprises:
- a first and a second longitudinally extending beam member which are offset from each other in a transverse direction of the vehicle, corresponding to the width direction of the battery pack, and which extend in the longitudinal direction between a front portion and a rear portion of the vehicle,
wherein the battery pack is arranged at least partly below the first and second longitudinally extending beam members, as seen in a height direction of the vehicle which corresponds to the height direction of the battery pack, such that the first and second longitudinally extending beam members are at least partly provided in the longitudinally extending space. A technical benefit may include that a compact packaging of the battery pack in the vehicle is achieved, whereby the battery module assemblies may be more easily mounted to the vehicle in directions along the transverse direction, i.e., from each lateral side of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2** is an exemplary battery pack in a top view according to an example.
**FIG. 3** is an exemplary battery pack in a side view according to an example.
**FIG. 4** is an exemplary battery pack in another side view according to an example.
**FIG. 5** is another view of **FIG. 3****,** according to an example.

The drawings are not necessarily drawn to scale. It shall also be noted that some details in the drawings may be exaggerated in order to better describe and illustrate the particular example. Like reference characters refer to like elements throughout the description, unless expressed otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to provide an improved battery pack configuration which is compact, modular, easy to package and mount to a vehicle, cost-effective, reliable and/or robust. Additionally, or alternatively, an aim of the present disclosure is to provide a battery pack and/or a vehicle which at least partially alleviate one or more drawbacks of the prior art, or which at least provide suitable alternatives. For example, for larger vehicles there may be a need to mount battery modules on top of each other since a large number of electrochemical battery cells are required for powering the vehicle. Hence, there is a need to package battery modules of a battery pack in a compact manner in a cost-effective, reliable and/or robust manner.

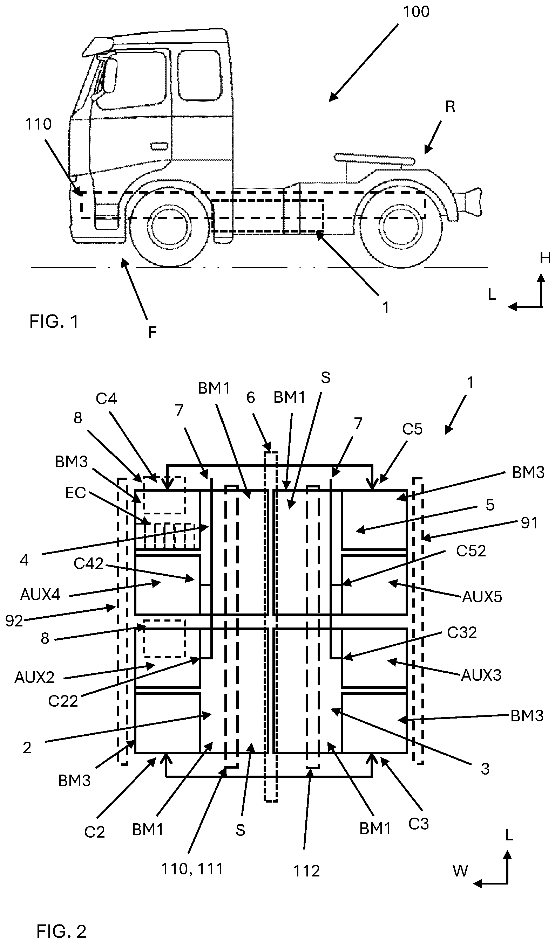

**FIG. 1** is an exemplary vehicle 100 in a side view according to an example. The vehicle 100 is a truck for towing one or more trailers (not shown). It shall however be understood that the vehicle may be any other type of vehicle, such as another type of truck, a bus, a passenger car, and construction equipment, such as an excavator, a wheel loader, etc. The vehicle 100 may be driven by a user (not shown) and/or be at least partly automatically driven, i.e., it may be a vehicle comprising autonomous driving capabilities. The vehicle 100 may be a fully electric vehicle or a hybrid vehicle. As such, the vehicle 100 may comprise one or more electric motors/generators and/or an internal combustion engine (not shown) for driving the vehicle 100. The vehicle 100 comprises a battery pack 1 according to examples disclosed herein. The vehicle 100 has a longitudinal direction L which corresponds to a travel direction of the vehicle 100. The vehicle 100 comprises a vehicle frame 110 which will be further described in the below.

**FIG. 2** is an exemplary battery pack 1 in a top view according to an example. For example, the battery pack 1 in Fig. 2 may be the battery pack 1 depicted in FIG. 1.

The battery pack 1 comprises at least two battery module assemblies 2, 3, 4, 5. In the shown example, four battery module assemblies 2, 3, 4, 5 are depicted.

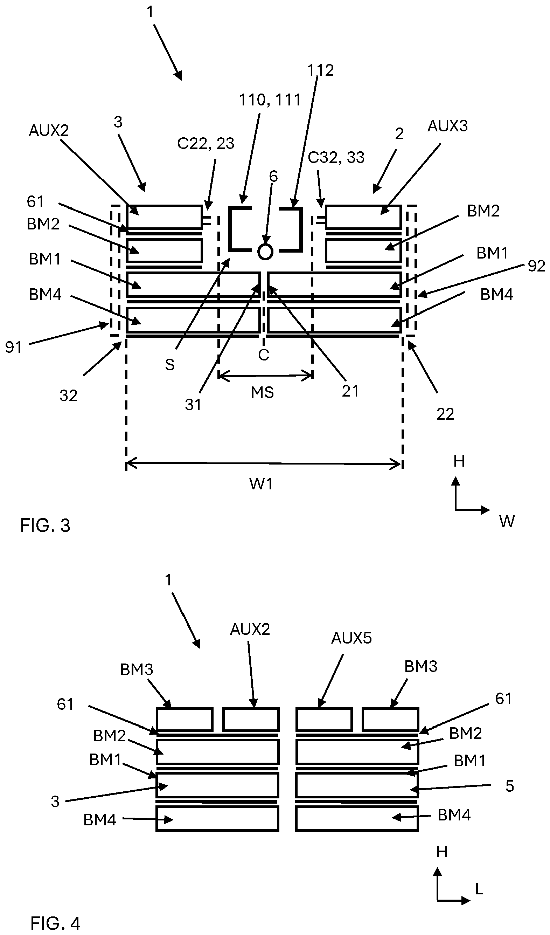

The battery pack 1 has a longitudinal extension along a longitudinal direction L, a width extension along a width direction W and a height extension along a height direction H (not indicated in FIG. 2, but e.g. indicated in FIG. 3). The height direction H in Fig. 2 is perpendicular to the longitudinal direction L and the width direction W. The longitudinal direction L and the width direction W are also perpendicular to each other. For example, the directions L, Hand W may correspond to a Cartesian coordinate system. The different directions L, H, W of the battery pack 1 preferably correspond to the corresponding directions L, H, W of the vehicle 100.

**FIG. 3** is an exemplary battery pack 1 in a side view according to an example. The battery pack 1 in FIG. 3 may be the battery pack 1 as shown in FIG. 2. The side view is here a view along the longitudinal direction L, facing the battery module assembly 2 and the battery module assembly 3, and viewed from the battery module assemblies 3 and 5, i.e. in a section between the battery module assemblies 2, 3 and the battery module assemblies 4, 5.

**FIG. 4** is an exemplary battery pack 1 in another side view according to an example. The battery pack 1 in FIG. 4 may be the battery pack 1 shown in FIG. 2 and/or FIG. 3. The side view is here a view along the width direction W, facing the battery module 3 and the battery module 5.

With reference to FIGS. 2-5, each one of the at least two battery module assemblies 2, 3, 4, 5 comprises a plurality of battery modules BM1, BM2, BM3 and BM4. Each battery module BM1-BM4 comprises a plurality of electrochemical battery cells EC stacked next to each other. In the shown example, the plurality of battery cells EC are prismatic cells which are stacked one after the other along the width direction W. It shall however be noted that the prismatic battery cells EC may additionally or alternatively be stacked along the longitudinal direction L. In some examples, the electrochemical battery cells are cylindrical cells. The electrochemical battery cells EC may be stacked one after the other in one or more parallel rows in the longitudinal direction L and/or in the width direction W.

The plurality of battery modules BM1-BM4 are stacked on top of each other in the height direction H (see e.g. FIG. 3), and are formed such that a first battery module BM1 provided below a second battery module BM2 extends beyond the second battery module BM2 in the width direction W to an outer end 21, 31 of the battery module assembly 2, 3, as seen in the width direction W. In the shown example, each battery module assembly comprises four battery modules, BM1-BM4. It shall however be noted that more or fewer battery modules may be used for the respective battery module assembly.

A first battery module assembly 2 and a second battery module assembly 3 of the at least two battery module assemblies 2, 3, 4, 5 are arranged next to each other such that the outer ends 21, 31 face each other in the width direction W and such that a longitudinally extending space S is formed above the respective first battery module BM1 of the first and second battery module assemblies 2, 3, as seen in the height direction H, and in-between the respective second battery module BM2 of the first and second battery module assemblies 2, 3, as seen in the width direction W.

As depicted in e.g. FIG. 3, the first and second battery module assemblies 2, 3 may be L-shaped, as seen in a sectional plane which is perpendicular to the longitudinal direction L. Additionally, or alternatively, the first and second battery module assemblies 2, 3 may together form a U-shaped structure, as seen in a sectional plane which is perpendicular to the longitudinal direction L.

As further shown in e.g. FIG. 3, the first battery module assembly 2 and the second battery module assembly 3 are preferably separate units such that the first and second battery module assemblies 2, 3 are allowed to be separated from each other. For example, a gap may be present between the first and second battery module assemblies 2, 3.

With further reference to e.g. FIG. 3, the outer ends 21, 31 of the first and second battery module assemblies 2, 3 which face each other in the width direction W are preferably provided in a mid-section MS of the battery pack 1, wherein the mid-section MS has a center C midway between a first battery pack outer end 22 of the first battery module assembly 2 and a second battery pack outer end 32 of the second battery module assembly 3, as seen in the width direction W, and an extension in the width direction W which corresponds to 30 %, 20 %, 10 % or less of a maximum width W1 of the battery pack 1 between the first battery pack outer end 22 and the second battery pack outer end 32.

With reference to e.g. FIG. 2, the battery pack 1 may further comprise at least one elongated media 6, 7 arranged in the longitudinally extending space S and connected to at least one of the at least two battery module assemblies 2, 3, 4, 5.

The at least one elongated media may comprises a first elongated media 6 which extends in the longitudinal direction L in the longitudinally extending space S and is connected to the at least one of the at least two battery module assemblies 2, 3, 4, 5 via a first connection interface C2, C3, C4, C5 which is provided on a battery pack outer end of the battery pack 1 which faces away from the battery pack 1 in a direction along the longitudinal direction L. In the shown example, each battery module assembly 2-5 is associated with a respective first connection interface C2-C5. The first elongated media 6 is in this example adapted to transport a coolant fluid.

The at least one elongated media may additionally or alternatively comprise a second elongated media 7 which extends in the longitudinal direction L in the longitudinally extending space S and is connected to the at least one of the at least two battery module assemblies 2, 3, 4, 5 via a second connection interface C22, C32, C42, C52 which is provided on a side surface 23, 33 of the at least one of the at least two battery module assemblies 2, 3, 4, 5 which delimits the longitudinally extending space S. In the shown example, each battery module assembly 2-5 is associated with a respective second connection interface C22-C52. The second elongated media 7 is in this example an electric cable and/or a data communication cable. This/these cable(s) may be connected to a junction box (not shown) provided on the vehicle 100.

With reference to FIG. 2, at least one of the at least two battery module assemblies 2, 3, 4, 5 may comprise a vent opening 8 (indicated by a dashed box) configured to eject hot gas and/or particles from the electrochemical battery cells EC, wherein the vent opening 8 is provided on a battery pack outer end or as shown in-between two adjacent battery module assemblies of the at least two battery module assemblies 2, 3, 4, 5.

The battery pack 1 as shown in the examples of FIGS. 2-4 comprises four battery module assemblies. The third battery module assembly 4 and the fourth battery module assembly 5 of the at least two battery module assemblies 2, 3, 4, 5 may as shown be arranged and/or configured in a similar manner as the first and second battery module assemblies 2, 3. Hence, by way of example, the third battery module assembly 4 and the fourth battery module assembly 5 may be arranged next to the first and second battery module assemblies 2, 3 and next to each other such that the outer ends of the third and fourth battery module assemblies 4, 5, face each other in the width direction W and such that the longitudinally extending space S is further formed above the respective first battery module BM1 of the third and fourth battery module assemblies 4, 5, as seen in the height direction H, and in-between the respective second battery module BM2 of the third and fourth battery module assemblies 4, 5, as seen in the width direction W.

In a similar manner as described in the above with respect to the first and second battery module assemblies 2, 3, the third and fourth battery module assemblies 4, 5 may be L-shaped, as seen in a sectional plane which is perpendicular to the longitudinal direction L, and/or the third and fourth battery module assemblies 4, 5 may together form a U-shaped structure, as seen in a sectional plane which is perpendicular to the longitudinal direction L.

The first, second, third and fourth battery module assemblies 2, 3, 4, 5 may as shown be separate units such that the first, second, third and fourth battery module assemblies 2, 3, 4, 5 are allowed to be separated from each other. Hence, a modular configuration is provided, which also may facilitate mounting of the battery pack 1 to the vehicle 100.

As shown in FIGS. 3 and 4, at least one battery module assembly 2, 3, 4, 5 of the at least two battery module assemblies 2, 3, 4, 5 may comprise a cooling plate member 61 which is provided in-between two adjacent battery modules BM2, BM3 which are stacked on top of each other in the height direction H. In some examples, a cooling plate member is provided in-between each two adjacent battery modules. The cooling plate member(s) is/are preferably fluidly connected to the first elongated media 6 via the connection interface(s) C2-C5. Hence, a coolant fluid may thereby be circulated through each cooling plate member. The cooling plate member(s) is/are configured to transfer heat between the cooling plate member and proximate battery modules.

As shown in FIGS. 2-4, at least one battery module assembly 2, 3, 4, 5 of the at least two battery module assemblies 2, 3, 4, 5 may comprise an auxiliary module AUX2-5 which comprises auxiliary electronic devices, such as one or more contactors, one or more fuses, one or more busbars, and/or one or more electronic control units. In the shown examples, each battery module assembly 2, 3, 4, 5 comprise an auxiliary module AUX2-5.

The auxiliary module AUX2-5 may as shown be provided on a first level in the height direction H of the battery module assembly 2-5, wherein the battery module assembly 2-5 further comprises a third battery module BM3 provided on the first level adjacent to the auxiliary module AUX2-5. The first level may be a top level of the battery module assembly 2-5, as seen in the height direction H, i.e. no additional battery module is provided above the top level. The third battery module BM3 and the auxiliary module AUX2-5 may as shown be provided above the second battery module BM2.

The cooling plate member 61 is preferably provided directly below the auxiliary module AUX2, AUX5 and the third battery module BM3 and configured to cool the auxiliary module AUX2 and the third battery module BM3. By being provided "directly below" may herein mean that no additional module is provided between the cooling plate member and the auxiliary module/third battery module. By this configuration, one cooling plate member 61 may be used for both the auxiliary module AUX2, AUX5 and the third battery module BM3.

FIGS. 2 and 3 also depict examples of a vehicle frame 110, i.e., when the battery pack is mounted to a vehicle 100, such as the vehicle 100 shown in FIG. 1. The vehicle frame 110 extends along a longitudinal direction L of the vehicle 100, corresponding to the longitudinal direction L of the battery pack 1.

The vehicle frame 110 comprises a first and a second longitudinally extending beam member 111, 112 which are offset from each other in a transverse direction W of the vehicle 100, corresponding to the width direction W of the battery pack 1. The first and second longitudinally extending beam members 111, 112 extend in the longitudinal direction L between a front portion F and a rear portion R of the vehicle 100 (See FIG. 1). In some examples, the first and second longitudinally extending beam members 111, 112 may be denoted rail members. As shown in FIG. 3, the first and second longitudinally extending beam members 111, 112 may have a cross-sectional profile which is U-formed. Alternative cross-sectional profiles are also possible, such as an I-, H-, T- or L-form.

As shown, the battery pack 1 is preferably arranged at least partly below the first and second longitudinally extending beam members 111, 112, as seen in a height direction H of the vehicle 100 which corresponds to the height direction H of the battery pack 1, such that the first and second longitudinally extending beam members 111, 112 are at least partly provided in the longitudinally extending space S.

As shown in the examples in FIGS. 2-4, the first and fourth battery modules BM1, BM4 may be substantially identical in outer shape. For at least one battery module assembly 2-5, such as for each one, the second battery module BM2 may have a length in the longitudinal direction L which corresponds to a length of the first and/or fourth battery module BM1, BM4 in the longitudinal direction L, and/or which corresponds to a combined length of the third battery module BM3 and the auxiliary module AUX2-5 in the longitudinal direction L. As further shown, each battery module assembly 2-5, such as each one, may as shown have four levels of battery modules arranged on top of each other, or any other number of levels, e.g., depending on the dimensions of the vehicle 100. The first battery module BM1 may as shown be provided above the fourth battery module BM4.

With reference to FIGS. 2 and 3, the vehicle 100 may comprise a first and/or a second crash protection member 91, 92 which are/is configured to protect the battery pack 1 from a side impact in the width direction W. The first and/or second crash protection member 91, 92 may be made of a rigid material, such as metal, which can withstand a side impact force up to a certain magnitude. At least one of the first/second crash protection member 91, 92 may comprise a hatch configured to give access for a user to the battery module assembly, such as to any one of the auxiliary modules AUX2-5. Thereby, service may be performed without removing the first/second crash protection member 91, 92.

The battery modules and/or the auxiliary modules as disclosed herein may as shown in e.g. FIGS. 2-5 be box-shaped, thereby e.g. facilitating packaging of the battery pack.

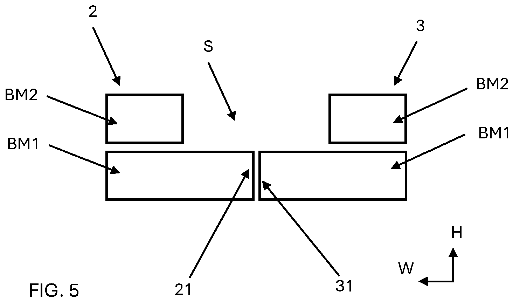

**FIG. 5** is another view of FIG. 3, according to an example. A battery pack 1 is shown, comprising at least two battery module assemblies 2, 3, the battery pack 1 having a longitudinal extension along a longitudinal direction L, a width extension along a width direction W and a height extension along a height direction H, wherein each one of the at least two battery module assemblies 2, 3 comprises:
- a plurality of battery modules BM1-BM2, each battery module comprising a plurality of electrochemical battery cells stacked next to each other,

wherein the plurality of battery modules BM1-BM2 are stacked on top of each other in the height direction H, and are formed such that a first battery module BM1 provided below a second battery module BM2 extends beyond the second battery module BM2 in the width direction W to an outer end 21, 31 of the battery module assembly 2, 3, as seen in the width direction W, and
wherein a first battery module assembly 2 and a second battery module assembly 3 of the at least two battery module assemblies 2, 3 are arranged next to each other such that the outer ends 21, 31 face each other in the width direction W and such that a longitudinally extending space S is formed above the respective first battery module BM1 of the first and second battery module assemblies 2, 3, as seen in the height direction H, and in-between the respective second battery module BM2 of the first and second battery module assemblies 2, 3, as seen in the width direction W.

In the following, possible features and feature combinations of the present disclosure are presented as a list of Examples.

Example 1: A battery pack (1) comprising at least two battery module assemblies (2, 3, 4, 5), the battery pack (1) having a longitudinal extension along a longitudinal direction (L), a width extension along a width direction (W) and a height extension along a height direction (H), wherein each one of the at least two battery module assemblies (2, 3, 4, 5) comprises:
- a plurality of battery modules (BM1-BM4), each battery module comprising a plurality of electrochemical battery cells (EC) stacked next to each other,

wherein the plurality of battery modules (BM1-BM4) are stacked on top of each other in the height direction (H), and are formed such that a first battery module (BM1) provided below a second battery module (BM2) extends beyond the second battery module (BM2) in the width direction (W) to an outer end (21, 31) of the battery module assembly (2, 3), as seen in the width direction (W), and
wherein a first battery module assembly (2) and a second battery module assembly (3) of the at least two battery module assemblies (2, 3, 4, 5) are arranged next to each other such that the outer ends (21, 31) face each other in the width direction (W) and such that a longitudinally extending space (S) is formed above the respective first battery module (BM1) of the first and second battery module assemblies (2, 3), as seen in the height direction (H), and in-between the respective second battery module (BM2) of the first and second battery module assemblies (2, 3), as seen in the width direction (W).

Example 2: The battery pack (1) according to Example 1, wherein the first and second battery module assemblies (2, 3) are L-shaped, as seen in a sectional plane which is perpendicular to the longitudinal direction (L).

Example 3: The battery pack (1) according to any one of the preceding Examples, wherein the first and second battery module assemblies (2, 3) together form a U-shaped structure, as seen in a sectional plane which is perpendicular to the longitudinal direction (L).

Example 4: The battery pack (1) according to any one of the preceding Examples, wherein the first battery module assembly (2) and the second battery module assembly (3) are separate units such that the first and second battery module assemblies (2, 3) are allowed to be separated from each other.

Example 5: The battery pack (1) according to any one of the preceding Examples, wherein the outer ends (21, 31) of the first and second battery module assemblies (2, 3) which face each other in the width direction (W) are provided in a mid-section (MS) of the battery pack (1), wherein the mid-section (MS) has a center (C) midway between a first battery pack outer end (22) of the first battery module assembly (2) and a second battery pack outer end (32) of the second battery module assembly (3), as seen in the width direction (W), and an extension in the width direction (W) which corresponds to 30 %, 20 %, 10 % or less of a maximum width (W1) of the battery pack (1) between the first battery pack outer end (22) and the second battery pack outer end (32).

Example 6: The battery pack (1) according to any one of the preceding Examples, further comprising at least one elongated media (6, 7) arranged in the longitudinally extending space (S) and connected to at least one of the at least two battery module assemblies (2, 3, 4, 5).

Example 7: The battery pack (1) according to Example 6, wherein the at least one elongated media comprises a first elongated media (6) which extends in the longitudinal direction (L) in the longitudinally extending space (S) and is connected to the at least one of the at least two battery module assemblies (2, 3, 4, 5) via a first connection interface (C2, C3, C4, C5) which is provided on a battery pack outer end of the battery pack (1) which faces away from the battery pack (1) in a direction along the longitudinal direction (L).

Example 8: The battery pack (1) according to Example 7, wherein the first elongated media (6) is adapted to transport a coolant fluid.

Example 9: The battery pack (1) according to any one of Examples 6-8, wherein the at least one elongated media comprises a second elongated media (7) which extends in the longitudinal direction (L) in the longitudinally extending space (S) and is connected to the at least one of the at least two battery module assemblies (2, 3, 4, 5) via a second connection interface (C22, C32, C42, C52) which is provided on a side surface (23, 33) of the at least one of the at least two battery module assemblies (2, 3, 4, 5) which delimits the longitudinally extending space (S).

Example 10: The battery pack (1) according to Example 9, wherein the second elongated media (7) is an electric cable and/or a data communication cable.

Example 11: The battery pack (1) according to any one of the preceding Examples, wherein at least one of the at least two battery module assemblies (2, 3, 4, 5) comprises a vent opening (8) configured to eject hot gas and/or particles from the electrochemical battery cells (EC), wherein the vent opening (8) is provided on a battery pack outer end or in-between two adjacent battery module assemblies of the at least two battery module assemblies (2, 3, 4, 5).

Example 12: The battery pack (1) according to any one of the preceding Examples, wherein a third battery module assembly (4) and a fourth battery module assembly (5) of the at least two battery module assemblies (2, 3, 4, 5) are arranged next to the first and second battery module assemblies (2, 3) and next to each other such that the outer ends face each other in the width direction (W) and such that the longitudinally extending space (S) is further formed above the respective first battery module (BM1) of the third and fourth battery module assemblies (4, 5), as seen in the height direction (H), and in-between the respective second battery module (BM2) of the third and fourth battery module assemblies (4, 5), as seen in the width direction (W).

Example 13: The battery pack (1) according to Example 12, wherein the third and fourth battery module assemblies (4, 5) are L-shaped, as seen in a sectional plane which is perpendicular to the longitudinal direction (L), and/or wherein the third and fourth battery module assemblies (4, 5) together form a U-shaped structure, as seen in a sectional plane which is perpendicular to the longitudinal direction (L).

Example 14: The battery pack (1) according to any one of Examples 12 or 13, wherein the first, second, third and fourth battery module assemblies (2, 3, 4, 5) are separate units such that the first, second, third and fourth battery module assemblies (2, 3, 4, 5) are allowed to be separated from each other.

Example 15: The battery pack (1) according to any one of the preceding Examples, wherein at least one battery module assembly (2, 3, 4, 5) of the at least two battery module assemblies (2, 3, 4, 5) comprises a cooling plate member (61) which is provided in-between two adjacent battery modules which are stacked on top of each other in the height direction (H).

Example 16: The battery pack (1) according to any one of the preceding Examples, wherein at least one battery module assembly (2, 3, 4, 5) of the at least two battery module assemblies (2, 3, 4, 5) comprises an auxiliary module (AUX2-5) which comprises auxiliary electronic devices, such as one or more contactors, one or more fuses, one or more busbars, and/or one or more electronic control units.

Example 17: The battery pack (1) according to Example 16, wherein the auxiliary module (AUX2-5) is provided on a first level in the height direction (H) of the battery module assembly, wherein the battery module assembly further comprises a third battery module (BM3) provided on the first level adjacent to the auxiliary module (AUX2-5).

Example 18: The battery pack (1) according to Example 17, wherein the first level is a top level of the battery module assembly, as seen in the height direction (H).

Example 19: The battery pack (1) according to any one of Examples 17 or 18, wherein the battery pack (1) comprises a cooling plate member (61) according to Example 15, and wherein the cooling plate member (61) is provided directly below the auxiliary module (AUX2) and the third battery module (BM3) and configured to cool the auxiliary module (AUX2) and the third battery module (BM3).

Example 20: A vehicle (100) comprising a battery pack (1) according to any one of the preceding Examples.

Example 21: The vehicle (100) according to Example 20, comprising a vehicle frame (110) which extends along a longitudinal direction (L) of the vehicle (100), corresponding to the longitudinal direction (L) of the battery pack (1), wherein the vehicle frame (110) comprises:
- a first and a second longitudinally extending beam member (111, 112) which are offset from each other in a transverse direction (W) of the vehicle (100), corresponding to the width direction (W) of the battery pack (1), and which extend in the longitudinal direction (L) between a front portion (F) and a rear portion (R) of the vehicle (100),
wherein the battery pack (1) is arranged at least partly below the first and second longitudinally extending beam members (111, 112), as seen in a height direction (H) of the vehicle (100) which corresponds to the height direction (H) of the battery pack (1), such that the first and second longitudinally extending beam members (111, 112) are at least partly provided in the longitudinally extending space (S).

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery pack (1) comprising at least two battery module assemblies (2, 3, 4, 5), the battery pack (1) having a longitudinal extension along a longitudinal direction (L), a width extension along a width direction (W) and a height extension along a height direction (H), wherein each one of the at least two battery module assemblies (2, 3, 4, 5) comprises:
- a plurality of battery modules (BM1-BM4), each battery module comprising a plurality of electrochemical battery cells (EC) stacked next to each other,
wherein the plurality of battery modules (BM1-BM4) are stacked on top of each other in the height direction (H), and are formed such that a first battery module (BM1) provided below a second battery module (BM2) extends beyond the second battery module (BM2) in the width direction (W) to an outer end (21, 31) of the battery module assembly (2, 3), as seen in the width direction (W), and
wherein a first battery module assembly (2) and a second battery module assembly (3) of the at least two battery module assemblies (2, 3, 4, 5) are arranged next to each other such that the outer ends (21, 31) face each other in the width direction (W) and such that a longitudinally extending space (S) is formed above the respective first battery module (BM1) of the first and second battery module assemblies (2, 3), as seen in the height direction (H), and in-between the respective second battery module (BM2) of the first and second battery module assemblies (2, 3), as seen in the width direction (W).

2. The battery pack (1) according to claim 1, wherein the first and second battery module assemblies (2, 3) are L-shaped, as seen in a sectional plane which is perpendicular to the longitudinal direction (L), and/or wherein the first and second battery module assemblies (2, 3) together form a U-shaped structure, as seen in a sectional plane which is perpendicular to the longitudinal direction (L).

3. The battery pack (1) according to any one of the preceding claims, wherein the first battery module assembly (2) and the second battery module assembly (3) are separate units such that the first and second battery module assemblies (2, 3) are allowed to be separated from each other.

4. The battery pack (1) according to any one of the preceding claims, further comprising at least one elongated media (6, 7) arranged in the longitudinally extending space (S) and connected to at least one of the at least two battery module assemblies (2, 3, 4, 5).

5. The battery pack (1) according to claim 4, wherein the at least one elongated media comprises a first elongated media (6) which extends in the longitudinal direction (L) in the longitudinally extending space (S) and is connected to the at least one of the at least two battery module assemblies (2, 3, 4, 5) via a first connection interface (C2, C3, C4, C5) which is provided on a battery pack outer end of the battery pack (1) which faces away from the battery pack (1) in a direction along the longitudinal direction (L), wherein optionally the first elongated media (6) is adapted to transport a coolant fluid.

6. The battery pack (1) according to any one of claims 4-5, wherein the at least one elongated media comprises a second elongated media (7) which extends in the longitudinal direction (L) in the longitudinally extending space (S) and is connected to the at least one of the at least two battery module assemblies (2, 3, 4, 5) via a second connection interface (C22, C32, C42, C52) which is provided on a side surface (23, 33) of the at least one of the at least two battery module assemblies (2, 3, 4, 5) which delimits the longitudinally extending space (S), wherein optionally the second elongated media (7) is an electric cable and/or a data communication cable.

7. The battery pack (1) according to any one of the preceding claims, wherein a third battery module assembly (4) and a fourth battery module assembly (5) of the at least two battery module assemblies (2, 3, 4, 5) are arranged next to the first and second battery module assemblies (2, 3) and next to each other such that the outer ends face each other in the width direction (W) and such that the longitudinally extending space (S) is further formed above the respective first battery module (BM1) of the third and fourth battery module assemblies (4, 5), as seen in the height direction (H), and in-between the respective second battery module (BM2) of the third and fourth battery module assemblies (4, 5), as seen in the width direction (W).

8. The battery pack (1) according to claim 7, wherein the third and fourth battery module assemblies (4, 5) are L-shaped, as seen in a sectional plane which is perpendicular to the longitudinal direction (L), and/or wherein the third and fourth battery module assemblies (4, 5) together form a U-shaped structure, as seen in a sectional plane which is perpendicular to the longitudinal direction (L).

9. The battery pack (1) according to any one of claims 7 or 8, wherein the first, second, third and fourth battery module assemblies (2, 3, 4, 5) are separate units such that the first, second, third and fourth battery module assemblies (2, 3, 4, 5) are allowed to be separated from each other.

10. The battery pack (1) according to any one of the preceding claims, wherein at least one battery module assembly (2, 3, 4, 5) of the at least two battery module assemblies (2, 3, 4, 5) comprises a cooling plate member (61) which is provided in-between two adjacent battery modules which are stacked on top of each other in the height direction (H).

11. The battery pack (1) according to any one of the preceding claims, wherein at least one battery module assembly (2, 3, 4, 5) of the at least two battery module assemblies (2, 3, 4, 5) comprises an auxiliary module (AUX2-5) which comprises auxiliary electronic devices, such as one or more contactors, one or more fuses, one or more busbars, and/or one or more electronic control units.

12. The battery pack (1) according to claim 11, wherein the auxiliary module (AUX2-5) is provided on a first level in the height direction (H) of the battery module assembly, wherein the battery module assembly further comprises a third battery module (BM3) provided on the first level adjacent to the auxiliary module (AUX2-5), wherein optionally the first level is a top level of the battery module assembly, as seen in the height direction (H).

13. The battery pack (1) according to any one of claims 11 or 12, wherein the battery pack (1) comprises a cooling plate member (61) according to claim 10, and wherein the cooling plate member (61) is provided directly below the auxiliary module (AUX2) and the third battery module (BM3) and configured to cool the auxiliary module (AUX2) and the third battery module (BM3).

14. A vehicle (100) comprising a battery pack (1) according to any one of the preceding claims.

15. The vehicle (100) according to claim 14, comprising a vehicle frame (110) which extends along a longitudinal direction (L) of the vehicle (100), corresponding to the longitudinal direction (L) of the battery pack (1), wherein the vehicle frame (110) comprises:
- a first and a second longitudinally extending beam member (111, 112) which are offset from each other in a transverse direction (W) of the vehicle (100), corresponding to the width direction (W) of the battery pack (1), and which extend in the longitudinal direction (L) between a front portion (F) and a rear portion (R) of the vehicle (100),
wherein the battery pack (1) is arranged at least partly below the first and second longitudinally extending beam members (111, 112), as seen in a height direction (H) of the vehicle (100) which corresponds to the height direction (H) of the battery pack (1), such that the first and second longitudinally extending beam members (111, 112) are at least partly provided in the longitudinally extending space (S).
